# EUROPEAN PATENT APPLICATION

(11) **EP 4 741 277 A1**
(43) Date of publication of application: **13.05.2026**
(21) Application number: 24211620.0
(22) Date of filing: 08.11.2024
(51) Int. Cl.: B63B 25/00, B63B 27/12

(54) **UNISHIP: UNIVERSAL DUAL-ENDED RO-RO SHIP WITH AUTOMATED HANDLING OF CONTAINERS AND VEHICLES**

(71) Applicant: Shehata, Magdy Hassan, 1365 Blommenholm Baerum (NO)
(72) Inventor: Shehata, Magdy Hassan, 1365 Blommenholm Baerum (NO)

(57) **Abstract**

UniShip combines container and Ro-Ro functionalities in a novel design, enabling efficient, dual-ended automated loading and unloading and adaptable automated securing of containers. In addition to double-stacked containers, including vehicles in open containers, UniShip is capable of transporting drive-in trucks and heavy machines in multiple cargo holds. Also, oversized freight on the upper deck. Its autonomous Ro-Ro system allows simultaneous, bidirectional container loading and unloading, reducing port times and labour needs. Automated lift platforms, automated container drive wheels, automated container securing, and autonomous shore-based gantry cranes streamline container handling, enhancing throughput and cutting costs. UniShip's enclosed, automated design reduces turnaround time, operational expenses, and environmental impact, offering a versatile, sustainable solution for modern cargo transport.

## Description

### 2. Technical Field

The present invention relates to a multi-purpose vessel designed to transport standard shipping containers, Ro-Ro (Roll-on/Roll-off) vehicles, and mixed cargo types. The vessel incorporates a unique side-loading/unloading system, fully automated cargo handling, and energy-efficient features, aimed at increasing operational efficiency.

As a result of optimized operations, energy savings, and emission reductions, UniShip, in addition, has reduced environmental impact.

### 3. Background of the Invention

Conventional container and Ro-Ro ships face limitations in cargo handling flexibility, operational efficiency, and port turnaround times. Standard ships are often optimized for a single cargo type, limiting their utility on mixed cargo routes. Furthermore, extended port times for loading/unloading reduce profitability and add to congestion. In addition, the maritime industry has "limited interoperability of mixed cargo types" and "the need for increased flexibility in modern congested ports".

The present invention addresses these issues by combining container and Ro-Ro capabilities in one vessel, equipped with a high-efficiency dual-ended loading/unloading system and fully automated cargo securing and management.

### 4. Description

### 4.1 Key Features

### 4.1.1 Dual-Ended Loading/Unloading

The vessel is equipped for simultaneous, bidirectional loading and unloading from both bow and stern, reducing port stay times.

### 4.1.2 Automated Cargo Handling System

The system includes AGVs and onboard lift platforms that manage containers and Ro-Ro vehicles autonomously, reducing manual handling requirements.

### 4.1.3 Side-Loading Gantry Crane System:

A high-capacity gantry crane extends through side hatches, allowing containers to be loaded directly onto the lift platform with a minimized port-side footprint.

### 4.1.4 Multi-Deck Cargo Holds

The ship's 7-9 cargo decks are optimized for a variety of cargo types, in double-stacked containers, including Ro-Ro vehicles and bulk goods, with efficient handling and space utilization.

### 4.1.5 Automatic Container Securing

The ship includes a combination of U-guides, guiding pillars, and securing twist locks and latches to stabilize containers with their Ro-Ro vehicles and mixed cargo types during transit.

### 4.1.6 Fully Enclosed Strucure

A fully enclosed design protects the ship from piracy and adverse weather, securing containers and reducing environmental exposure.

### 4.1.7 Energy-Efficient Superstructure

Renewable energy sources, including solar panels and wind wings/sails, reduce fuel dependency.

### 4.1.8 Energy-Efficient Superstructure

4.1.8.1 Double-stacked container handling as a single unit.
4.1.8.2 Bidirectional loading/unloading.
4.1.8.3 Parallel multi-deck operations.
4.1.8.4 Simultaneous loading/unloading across decks and directions.
4.1.8.5 Optimal utilization of lift platform.
4.1.8.6 Seamless integration with port handling systems.

### 4.2 Automated Loading and Unloading Process

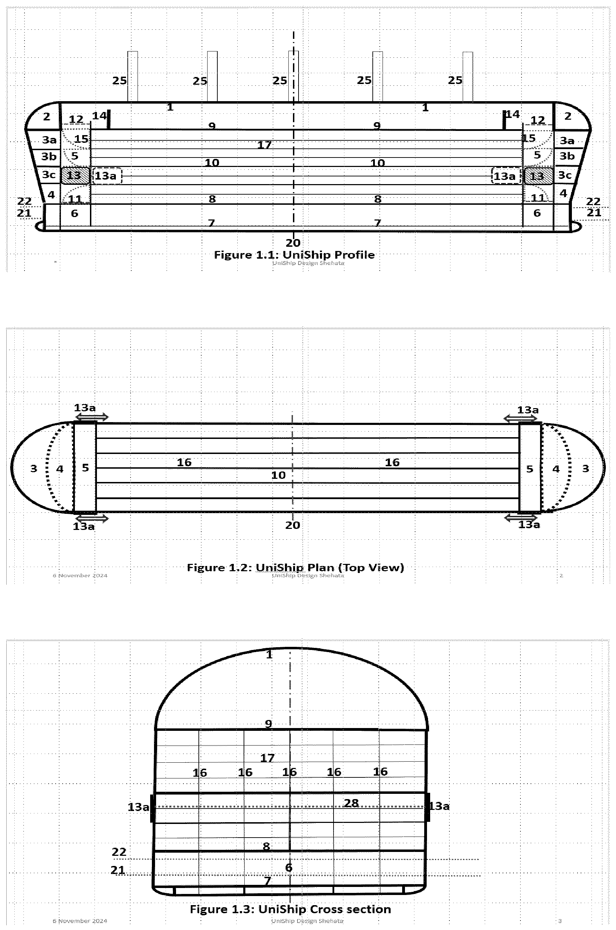

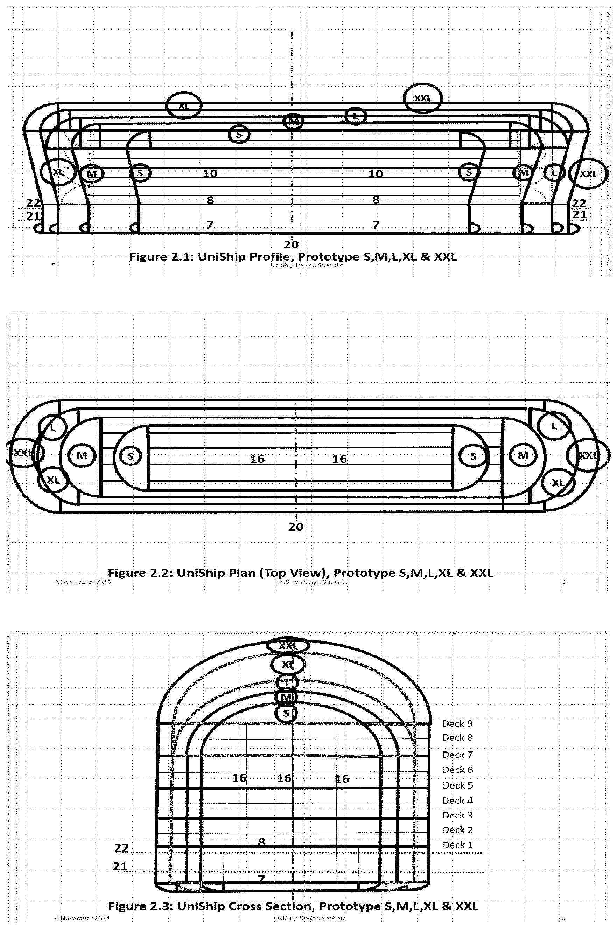

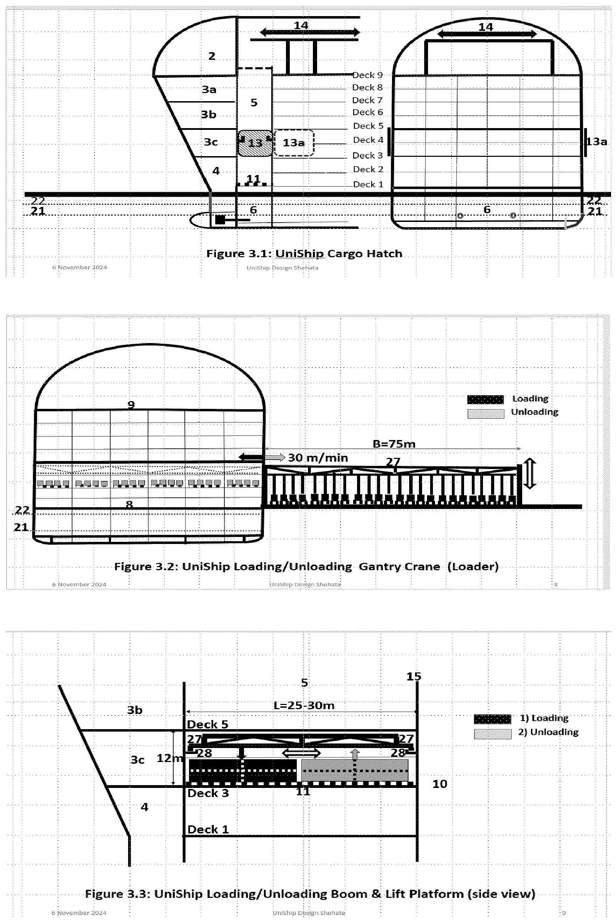

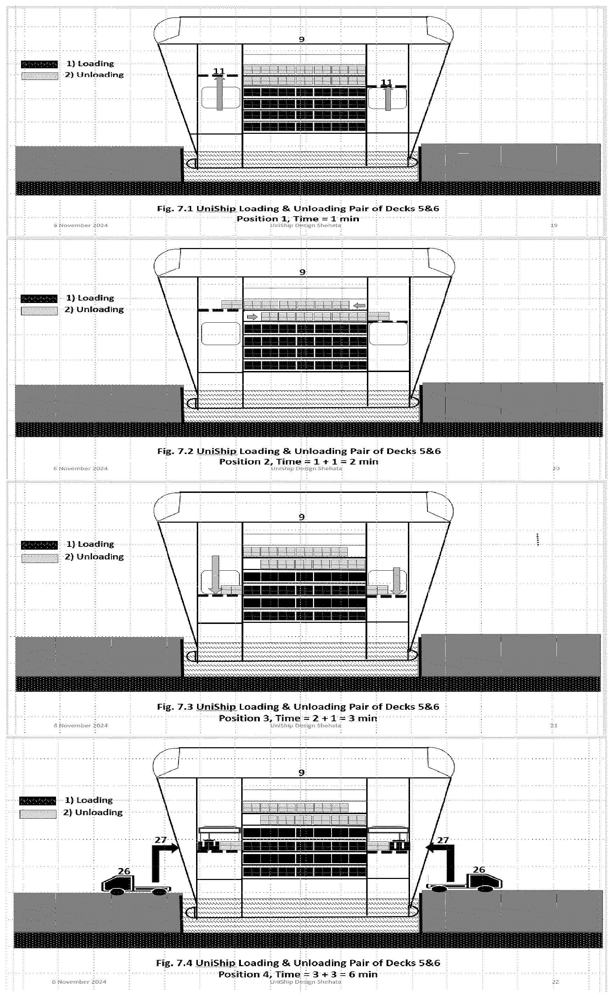

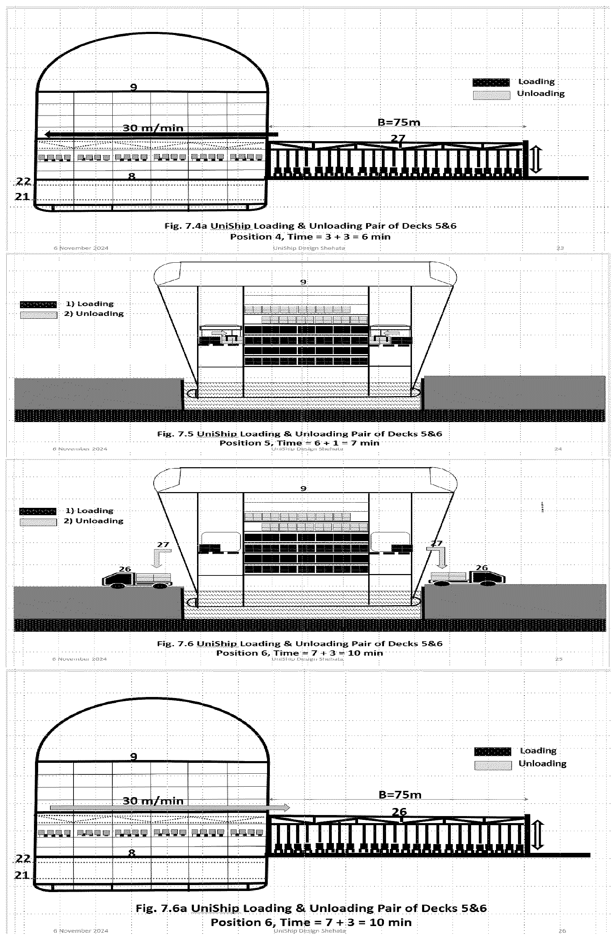

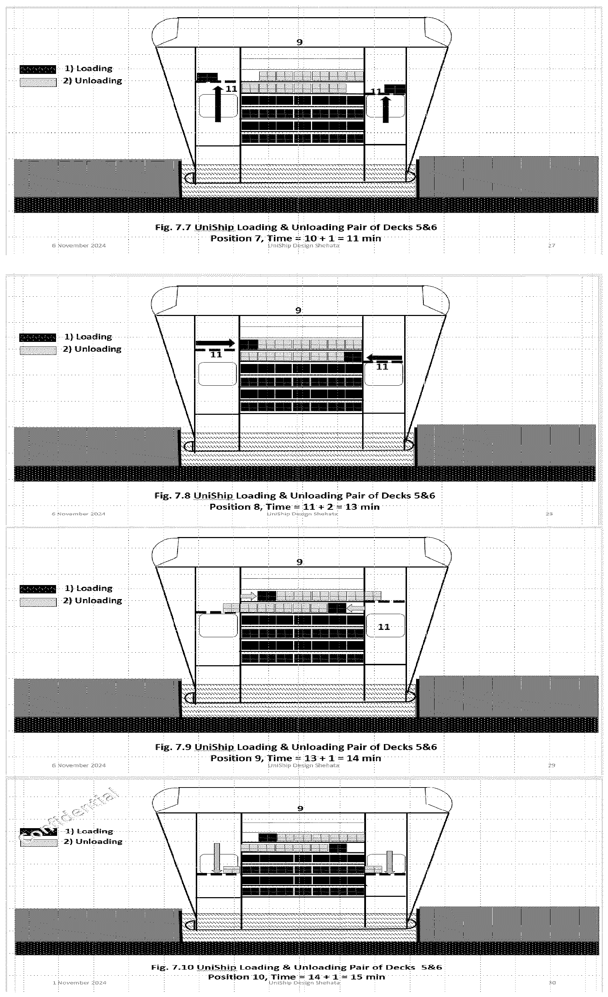

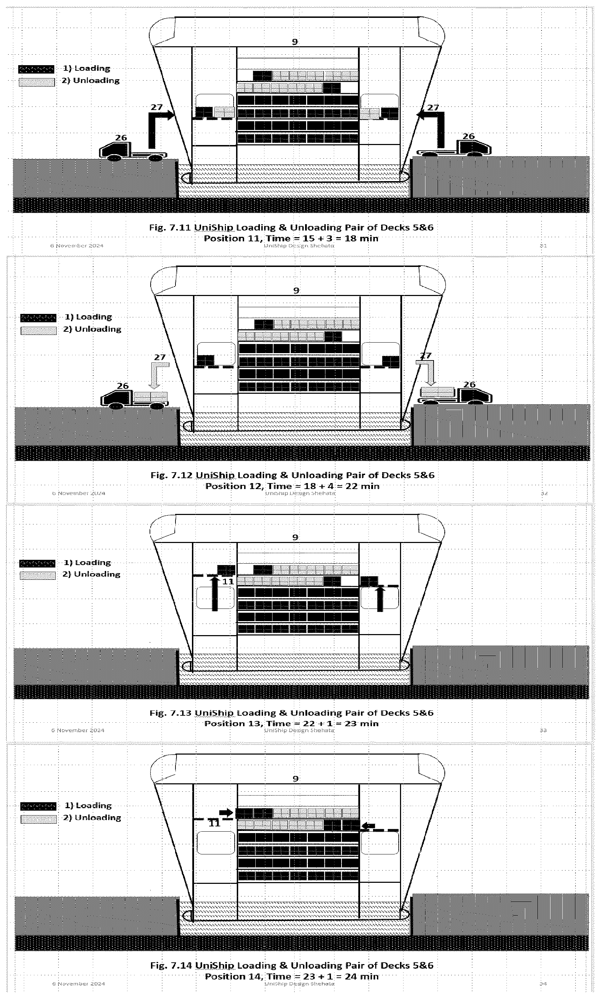

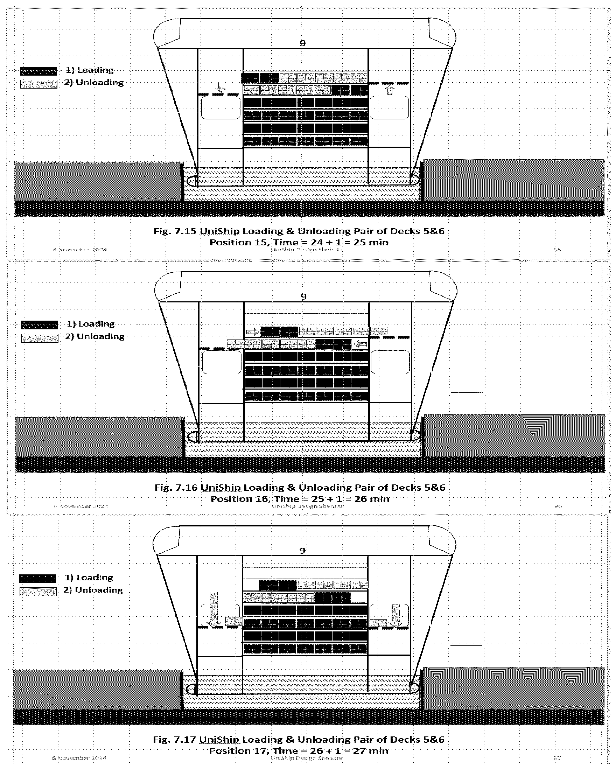

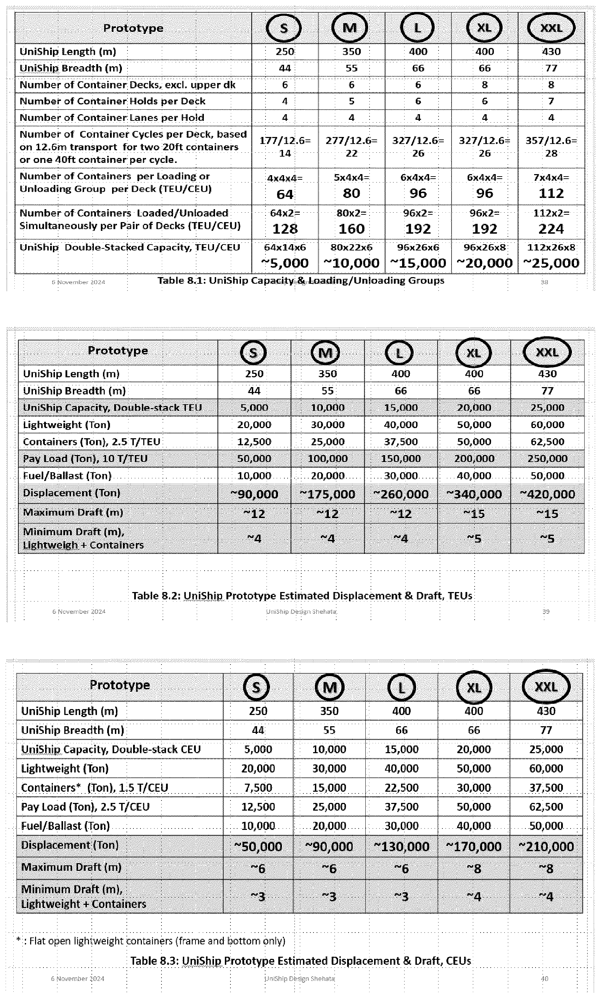

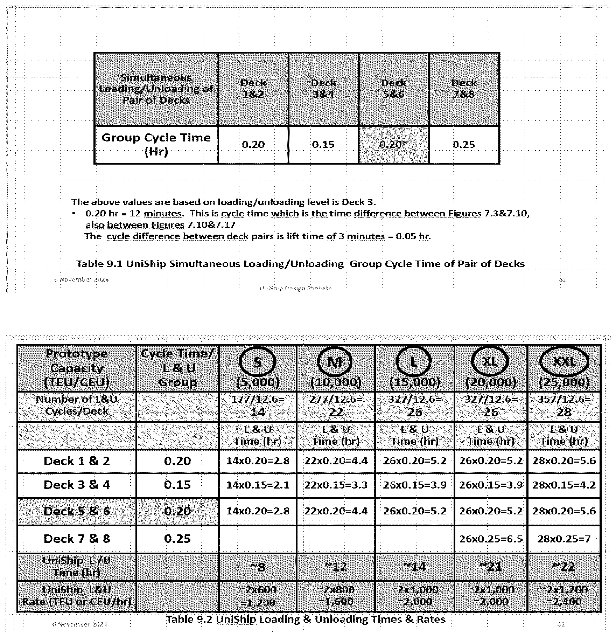

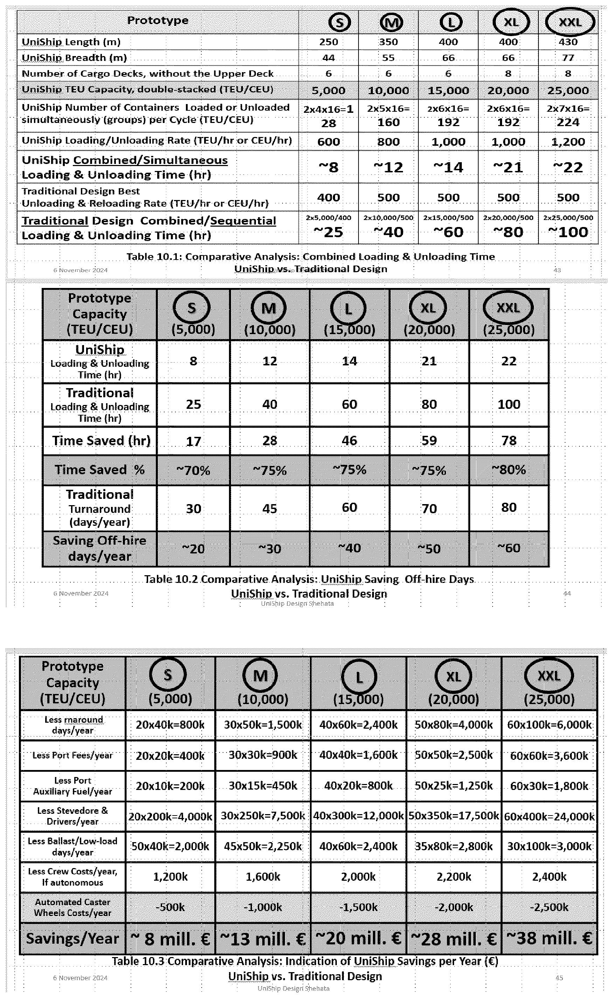

1. Before the ship's docking, containers are double-stacked and secured with twist locks (38) and lowered onto the transporters/AVGs (26).
2. Upon docking, the shore loading/unloading gantry cranes (27) are to be aligned with the ship's open side cargo hatches (13).
3. The AGVs proceed under the shore gantry loading cranes at a speed of 100 m/min.
4. The partial transverse bulkheads (15) open for loading/unloading deck pairs.
5. The shore gantry crane extension booms (27) transfer the containers through side hatches (13) to the ship's lift platforms (11), onto the secured drive wheels (35), aligned in U-guides (36).
6. The extension booms retract with the waiting containers on the other half of the platform for unloading. See Figure 3.3.
7. The lift platforms (11), transport the containers vertically to the designated cargo decks (17), where they are positioned by caster wheels (35) and guided by U-guides (36).
8. Containers are moved from the platforms (11) by their self-powered/battery caster wheels (35) into the cargo holds, guided by the wheel U-guides (36), sensors, and the pillar guides (37).
9. The platform is raised/lowered to unload containers from the pairing deck, Figure 7.9, before lowering to loading/unloading level/Deck 3, with the containers to be unloaded.
10. When loaded containers are in their final positions in the holds, controlled by sensors, the caster wheels (35) are secured with brakes and stoppers, and the automated top and side latches (39 & 40) secure each stack.
11. After completing loading/unloading and securing containers in their final positions on each pair of decks, their partial transverse bulkheads (15) are to be closed.
12. The process repeats for the other deck pairs until all containers are loaded/unloaded.
13. Oversize cargo is to be secured/lashed after being placed in position on the upper deck (9) by the ship's gantry cranes (14).
14. The hatch covers (12) for the lift rooms (5) are to be closed.
15. The ship's cargo hatches (13) are to be closed.
16. The ship undocks and sails.

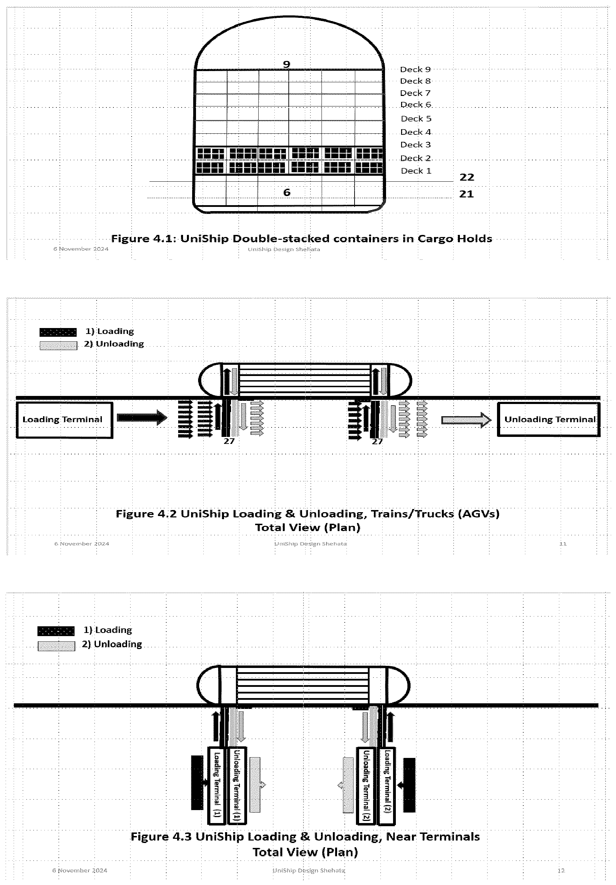

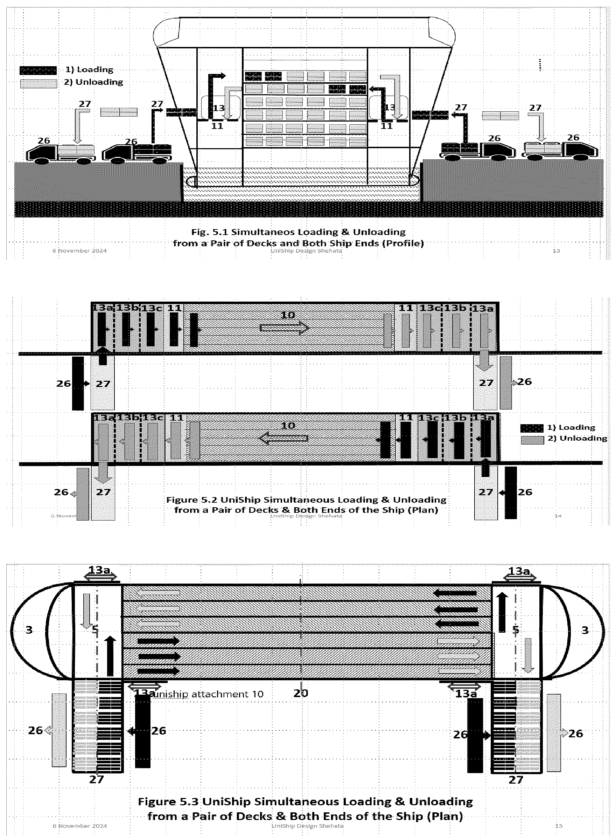

The above process is illustrated in Figures 3.1, 3.2, 4.1, 4.2 and 5.1, 5.2, 5.3.

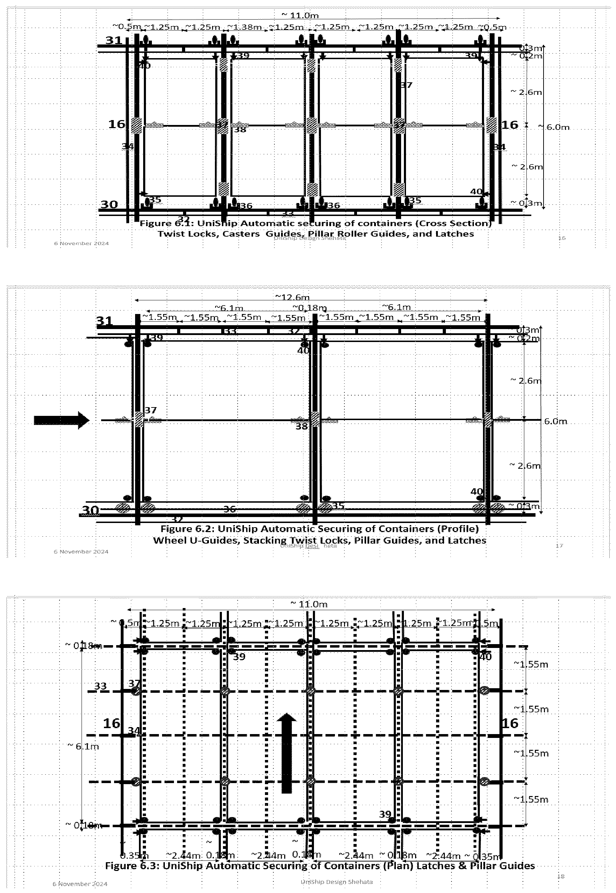

The automatic container securing system is shown in Figures 6.1-6.3.

### 4.3 Example Embodiment 1: Mid-Size (M)

A mid-size UniShip model with a capacity of 10,000 TEUs, equipped with:
Dual-ended operation that enables simultaneous loading/unloading from both bow and stern, enhancing port efficiency.

Deck Arrangement with nine cargo decks, arranged to support efficient stacking of double-stacked TEUs, which maximizes space utilization.

The container hold is about 6m high, accommodating double-stacked containers of 5.2m height, and allowing for ~ 0.4m for the containers' drive wheels' height, and ~0.4m for deck beams and top securing latches.

Energy-efficient design that incorporates solar panels on the superstructure, providing supplementary power for auxiliary functions. Automated container handling system that utilizes AGVs and automated securing mechanisms to transport containers from shore to designated cargo holds within the vessel. The AGVs can transport two double-stacked 40ft/45ft containers, or four 20ft double-stacked containers, weighing up to 60 tons, at a speed of 100m/min from/to the container terminal. Since there are 20 container lanes per deck on prototype M, the terminal should be equipped with 40 AGVs loading/unloading at both ship ends, and another 40 AGVs loading/unloading at the terminal. The AGV loading/unloading cycle should match the ship's lift platform cycle for optimum complete cycle between the terminal and the container holds onboard, estimated ~ 12 minutes. In this case, the number of TEUs per cycle is 160 TEUs, which corresponds to ~ 800 TEU or CEU per hour. As both loading and unloading take place simultaneously, the combined loading and unloading rate is ~1,600 TEU or CEU per hour. The total time for combined/simultaneous loading and unloading is estimated to be 12 hours only.

This embodiment focuses on medium- to high-frequency routes where operational speed, mixed cargo capacity, and reduced port stay are essential for profitability.

### 4.4 Example Embodiment 2: Extra Large Size (XXL) with Heavy and Oversized Cargo

A large UniShip model designed for handling oversized and heavy cargoes in addition to standard containers, with features including: Enhanced hull strength to support heavy-duty Ro-Ro vehicles, construction machinery, and other oversized cargoes.

Additional automated systems for handling varied cargo types, ensuring secure placement and minimizing load shift risk.

Customized securing mechanisms for containers, such as built-in locking mechanisms that adjust based on cargo height and weight.

This model is suitable for long-haul routes and specialized cargo needs where high stability and safety are crucial.

### 4.4.1 Heavy Cargo

Heavy cargo up to 60 tons in double-stacked Flat Rack Containers or Open Top Containers is loaded on the lower decks for stability considerations.

### 4.4.2 Oversized Cargo, in height

Cargo with a height of 2.5-5m, but up to 2.4m wide and 12-13m long, is loaded in single 40-45ft Flat Rack Containers in container holds. Alternatively, it can be loaded on the upper deck.

### 4.4.3 Oversized Wheeled Cargo

Wheeled oversized cargo, such as large trucks or machines, with a width up to 10m wide, 5.5m high, and 25m long, is loaded without containers in container holds, using a different loading and unloading process. Alternatively, it can be loaded on the upper deck.

### 4.4.4 Oversized Unwheeled Cargo

Unwheeled oversized cargo, such as large propellers, machinery, wind turbine blades, up to 28m wide, 10m high (size of the cargo side hatches), and 75m long (platform size), is loaded without containers on the upper deck, using the ship's gantry cranes.

### 4.5 Reference Numerals

1: Half-cylindrical superstructure
2: Bridge
3a: Bosun's store
3b: Mooring equipment
3c: Chain lockers
4: Peak tank
5: Lift room
6: Engine room
7: Tank top (2-3m)
8: Lower Cargo Deck
9: Upper Cargo Deck
10: Cargo zone
11: Lift platform (lift)
12: Hatch cover, upper deck
13: Cargo hatch
13a: Cargo hatch cover
14: Ship gantry crane
15: Partial transverse bulkheads
16: Longitudinal bulkheads
*17: Cargo* decks
*18: Cargo holds*
20: Midship
21: Minimum draft
22: Maximum draft
23: Pipe tunnel
25: Wind wings/sails (* optional)
26: Automated Guided Vehicles (AGVs)
27: Shore loading/unloading crane (loader)
28: Loader boom support & guide rail
30: Lower hold deck
31: Upper hold deck
32: Deck longitudinals
33: Deck beams
34: Bulkhead frames
35: Caster wheels
36: Caster wheel U-guides
37: Pillar-guides
38: Stacking twist locks
39: Top latches
40: Side latches

### 5. Advantages and Industrial Applicability

The UniShip design presents multiple advantages:
Operational Flexibility: The ability to carry containers, vehicles, and bulk cargo on a single voyage reduces dependency on return ballast trips, enhancing fleet efficiency.

Increased Port Throughput: The dual-ended Ro-Ro system and automated container handling reduce port turnaround time, allowing the vessel to maximize utilization and maintain a high frequency of trips.

Environmental Sustainability: Solar panels and wind-assisted options reduce the vessel's carbon footprint, aligning with industry goals for sustainability.

Reduced Crew Requirements: The high degree of automation lowers crew dependency, cutting operational costs and addressing global crew shortages. Potentially, UniShip can be operated autonomously.

Enhanced Safety and Security: The fully enclosed structure offers better cargo protection from piracy, weather, and accidents, which minimizes insurance risks and operating costs.

UniShip design is highly applicable in industries such as container shipping, automotive transport, bulk logistics, and mixed cargo transport, providing a solution that meets the dynamic needs of global shipping in terms of efficiency, versatility, and environmental impact.

### 6. Benefits

UniShip's innovative design yields significant economic/operational, safety, security, and environmental benefits.

### 6.1 Economic/Operational Benefits

6.1.1 Cargo versatility allows multiple cargo types per voyage, reducing specialized ship needs and minimizing ballast voyages.
6.1.2 Reduced turnaround time reduces port time and associated costs, as well as off-hire time.
6.1.3 Automatic container securing eliminates/reduces the need for onboard labor.
6.1.4 Hull internal surface not in direct contact with the cargo reduces hull maintenance and repair costs, and extends the lifespan of the hull.
6.1.5 Autonomous Operation reduces crew-related construction and operational costs.
6.1.6 Generating solar and wind energy reduces operational costs.
6.1.7 Avoiding loss of containers overboard.
6.3.1.8 Reduced risk of piracy.
6.1.9 Streamlined Port Operations because of faster loading/unloading rates, resulting in reduced port congestion and increased operational efficiency.
6.1.10 Delivery of containerized cargo, rather than cargo in bulk, ready for immediate distribution is an added value to cargo owners and port authorities.
6.1.11 Less construction costs because of standardization and modular construction.

### 6.2 Safety Benefits

6.2.1 Improved survivability in case of damage because of the extensive subdivision of UniShip's hull structure.
6.2.2 Reduced risk of shift of cargo in severe weather conditions, as in the case of bulk or grain carriers, because the cargo is containerized, and the containers are secured.
6.2.3 Mitigated consequences of accidents on board, due to the provided redundancy.
6.2.4 Eliminated the risk of human error and accidents on board, in the case of autonomous operation.

### 6.3 Security Benefits

6.3.1 Less risk of boarding by pirates, as UniShip is fully enclosed with a rounded superstructure.
6.3.2 Less potential risk from port workers onboard, as UniShip is fully automated in loading, securing, and unloading of containers and vehicles, eliminating the need for human intervention onboard.

### 6.4 Environmental Benefits

6.4.1 Minimizing the risk of oil spills in the event of accidents due to UniShip extensive hull subdivision and containerized cargo.
6.4.2 Protection Against Container Loss: The enclosed design protects against container loss in adverse weather conditions.
6.4.3 Reduced ballast voyages and their negative impact on both air pollution and seawater ballast pollution.
6.4.4 UniShip supports renewable energy possibilities (e.g., solar and wind generation on superstructure).
6.4.5 Reduced turnaround time improves port efficiency and reduces waiting time.

The UniShip represents an evolution in vessel design, merging traditional Ro-Ro and container functionalities into a single, highly efficient, automated system. This innovative design enables carriers to optimize cargo operations, minimize port time, and reduce environmental impact, making UniShip a robust solution for the future of the maritime industry.

### 9. Claims

### 8.1 Independent Claim

### 8.1.1 Containerized Cargo

A ship configured for transporting containerized cargo and Ro-Ro vehicles, featuring specialized container holds designed for double-stacked containers, and incorporating gantry cranes capable of transporting oversized cargo on the upper deck.

### 8.1.2 Multi-Deck Cargo Holds

A configuration of multiple cargo decks and longitudinal bulkheads creates multiple longitudinal cargo holds, on each deck, that accommodate double-stacked containers and vehicles, facilitating automatic Ro-Ro loading, securing, and unloading with arrangements for optimized cargo stacking and secure storage during transit.

### 8.1.3 Dual-Ended Loading/Unloading

A method for simultaneously loading and unloading containers and Ro-Ro vehicles from both the bow and stern ends of the vessel, reducing time in port and allowing efficient turnaround.

### 8.1.4 Automated Container Handling System

An automated system using AGVs and automated gantry cranes ashore, and onboard lift platforms to seamlessly transfer containers between the ship and shore, synchronizing with the ship's dual-ended loading operations to maximize efficiency.

### 8.1.5 Automated Container Securing Mechanism

A mechanism that automatically secures containers on the vessel using integrated caster wheels, U-guides, pillar-guides, twist locks, and latches, ensuring optimal stability and secure positioning without manual intervention.

### 8.1.6 Side-Loading Gantry Crane

A crane system that operates laterally relative to the vessel, extending through side hatches to load containers onto an onboard lift platform. The crane is equipped with multiple spreaders to handle up to 28 double-stacked containers, maximizing loading/unloading efficiency.

### 8.1.7 Versatile Cargo Compatibility

A cargo management system adaptable for standard containers, Ro-Ro vehicles, oversized cargo, liquid, bulk, and gas types, allowing mixed cargo loads within a single voyage, and different cargo loads on the return voyage.

### 8.1.8 Energy-Generating Superstructure

The half-cylindrical superstructure features renewable energy options, including solar panels and optional wind wings or sails, which support auxiliary operations and reduce overall fuel dependency.

## Claims

1. Claim 2: The vessel of claim 1, wherein vehicles are lashed in open platform containers, and loaded, secured, and unloaded the same way as other containers within the Ro-Ro holds.

2. Claim 3: The vessel of claim 1 or 2, further comprising a dual-ended design that allows for bi-directional docking and loading/unloading operations.

3. Claim 4: The vessel of any one of claims 1-3, wherein the lift platforms span the full breadth of the vessel, enable loading and unloading on multiple cargo decks, and are designed to accommodate large groups of containers, optimizing the loading and unloading sequence.

4. Claim 5: The vessel of any one of claims 1-4, wherein the loading/unloading hatches are positioned on both sides of the vessel to facilitate versatile dockside operations and provide redundancy.

5. Claim 6: The vessel of any one of claims 1-5, further comprising an integrated control system that automates the alignment, positioning, and transfer of cargo between the shore and the vessel.

6. Claim 7: The vessel of any one of claims 1-6, wherein the loading/unloading sequence is fully automated and synchronized with shore-side AGVs and gantry cranes for efficient transfer of containers.

7. Claim 8: The vessel of any one of claims 1-7, wherein the lift platform is capable of moving cargo vertically between all cargo decks and is configured to ensure stability during movement through automated load balancing.

8. Claim 9: The vessel of any one of claims 1-8, wherein each cargo deck includes safety barriers and anti-slip mechanisms to secure containers and vehicles during transit.

9. Claim 10: The vessel of any one of claims 1-9, wherein the system includes real-time sensors for monitoring cargo alignment, weight distribution, and deck occupancy.

10. Claim 11: The vessel of any one of claims 1-10, wherein the vessel is fitted with tracks for guiding and supporting the extension boom of shore gantry cranes while extended into the vessel for loading and unloading, assuming that motion compensation is provided to mitigate the relative motion between the stationary gantry crane ashore and the moving ship due to wind, tide, and waves.

11. Claim 12: The vessel of any one of claims 1-11, further comprising a software module that can communicate with port infrastructure to optimize the sequence of loading and unloading operations according to vessel stability and cargo type.

12. Claim 13: The vessel of any one of claims 1-12, further comprising gantry cranes capable of moving oversized cargo to a designated area on the upper deck.

13. Claim 14: The vessel of any one of claims 1-13, wherein the shore gantry cranes include adjustable spreaders to accommodate various sizes and configurations of containers.
